# EUROPEAN PATENT APPLICATION

(11) **EP 4 807 856 A1**
(43) Date of publication of application: **16.09.2026**
(21) Application number: 25163517.3
(22) Date of filing: 13.03.2025
(51) Int. Cl.: H01M 10/613, H01M 10/625, H01M 10/6556, H01M 10/6568

(54) **A FLOTATION DEVICE FOR THERMAL RUNAWAY MANAGEMENT**

(71) Applicant: Volvo Truck Corporation, 405 08 Göteborg (SE)
(72) Inventor: LINDELÖW, Fredrik, Skövde (SE); TINGBERG, Tobias, Mölnlycke (SE)
(74) Representative: Ström & Gulliksson AB

(57) **Abstract**

A flotation device (30) comprising: a first portion (32) arranged in fluid communication with liquid coolant accommodated by a liquid coolant pipe (20), the first portion (32) causing selective blocking or opening of an outlet (22) leading inside a battery pack (10); a second portion (34) arranged inside the battery pack (10) being floatable; and a third portion (36) interconnecting the portions (32, 34), wherein the third portion (36) is configured to adjust a position of the first portion (32) based on a position of the second portion (34).

## Description

### TECHNICAL FIELD

The disclosure relates generally to thermal runaway management. In particular aspects, the disclosure relates to a flotation device for thermal runaway management. The disclosure can be applied to heavy-duty vehicles, such as trucks, buses, and construction equipment, among other vehicle types. The disclosure can also be applied to other areas of application, such as marine vessels, industrial applications, stationary applications, among other areas of application. Although the disclosure may be described with respect to a particular area of application, the disclosure is not restricted to any particular area of application.

### BACKGROUND

With the recent focus on electric vehicles and devices as an alternative to fossil fuels, more and more battery packs are being used. Such battery packs may fail and overheat in a thermal runaway. This may in turn cause a chain reaction as the thermal runaway can spread to adjacent battery packs.

It is in view of the above observations and others the present inventors herein are suggesting one or more improvements to the prior art of thermal runaway management.

### SUMMARY

A liquid coolant that comes into contact with a terminal circuit may lead to the liquid coolant being subjected to chemical decomposition which can cause a buildup of hydrogen gas. The prior art fails to suggest a satisfactory solution for managing thermal runaway events, and especially where thermal runaways trigger chain reactions of uncontrolled thermal runaways that cascade among a plurality of battery modules. A flotation device is employed herein that aims to manage a height level of liquid coolant released into the battery pack when a thermal runaway event occurs.

In a first aspect of the disclosure there is accordingly provided a flotation device attached to a liquid coolant pipe of a battery pack having one or more battery modules, the flotation device comprising: a first portion arranged in fluid communication with liquid coolant accommodated by the liquid coolant pipe, the first portion causing selective blocking or opening of an outlet leading inside the battery pack; a second portion arranged inside the battery pack and being floatable; and a third portion interconnecting the first and second portions, wherein the third portion is configured to adjust a position of the first portion based on a position of the second portion.

The first aspect of the disclosure may seek to prevent coolant overflow and protect sensitive battery components during a thermal runaway event. A technical benefit may include enhancing safety and height level control by ensuring the coolant level is precisely managed, preventing damage and improving system reliability.

Optionally in some examples, including in at least one preferred example, the third portion adjusts the position of the first portion to physically block the outlet. A technical benefit may include a reliable mechanical method to block the outlet, ensuring immediate response to coolant overflow.

Optionally in some examples, including in at least one preferred example, further comprising an electronic switch, wherein the third portion adjusts the position of the first portion to activate said electronic switch to trigger a block of the outlet. A technical benefit may include allowing integration with electronic systems for precise and automated control of the outlet blockage.

Optionally in some examples, including in at least one preferred example, further comprising a pipe extension portion, wherein the first portion, the outlet, and at least parts of the third portion is arranged in the pipe extension portion. A technical benefit may include improving spatial organization and facilitating maintenance by consolidating key components within the pipe extension.

Optionally in some examples, including in at least one preferred example, wherein the pipe extension portion is retrofitted to the liquid coolant pipe such that an opening for liquid coolant is formed at an end of the pipe extension portion. A technical benefit may include enabling easy adaptation to existing systems, allowing for straightforward retrofitting and enhanced functionality.

Optionally in some examples, including in at least one preferred example, further comprising an actuator configured to control the release of liquid coolant through the outlet. A technical benefit may include offering precise control over coolant release, enhancing the responsiveness to thermal conditions.

Optionally in some examples, including in at least one preferred example, wherein the actuator is configured to be controlled by a battery management system of the battery pack based on battery data indicating the presence of the thermal runaway event. A technical benefit may include allowing the system to respond intelligently to real-time battery data, improving safety and efficiency.

Optionally in some examples, including in at least one preferred example, wherein the actuator comprises a fusible material having a melting point or sublimation point corresponding to a temperature threshold. A technical benefit may include providing a fail-safe mechanism that automatically triggers coolant release at critical temperatures.

Optionally in some examples, including in at least one preferred example, wherein the outlet comprises a fusible material having a melting point or sublimation point corresponding to a temperature threshold. A technical benefit may include providing a fail-safe mechanism that automatically triggers coolant release at critical temperatures.

Optionally in some examples, including in at least one preferred example, wherein the second portion comprises a material having a density lower than that of the liquid coolant. A technical benefit may include enhancing buoyancy control to maintain effective management of the coolant level.

Optionally in some examples, including in at least one preferred example, wherein the second portion comprises an elongated member having a lower surface that is generally planar with a surface of said released liquid coolant. A technical benefit may include enhancing buoyancy control to maintain effective management of the coolant level.

Optionally in some examples, including in at least one preferred example, wherein the outlet comprises a controllable hatch movable between a blocking state and an open state. A technical benefit may include allowing for dynamic control of the coolant flow, adapting to various operational states.

Optionally in some examples, including in at least one preferred example, wherein the outlet is arranged below a terminal circuit of a lowest battery module from among the one or more battery modules. A technical benefit may include reducing risk by positioning the outlet to avoid contact with sensitive circuitry.

Optionally in some examples, including in at least one preferred example, wherein the outlet is arranged adjacent to a bottom of the battery pack. A technical benefit may include improving coolant dispersion and reducing the risk of damage by positioning the outlet near the battery pack's bottom.

In a second aspect of the disclosure there is provided a method for thermal runaway management, comprising: accommodating liquid coolant in a liquid coolant pipe of a battery pack having one or more battery modules; attaching a flotation device to the liquid coolant pipe, wherein the flotation device comprises a first portion arranged in fluid communication with liquid coolant accommodated by the liquid coolant pipe, the first portion causing selective blocking or opening of an outlet leading inside the battery pack, a second portion arranged inside the battery pack and being floatable, and a third portion interconnecting the first and second portions, wherein the third portion is configured to adjust a position of the first portion based on a position of the second portion.

The second aspect of the disclosure may seek to prevent coolant overflow and protect sensitive battery components during a thermal runaway event. A technical benefit may include enhancing safety and height level control by ensuring the coolant level is precisely managed, preventing damage and improving system reliability.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary schematic illustration of an electric vehicle according to an example.
**FIG. 2** is an exemplary schematic illustration of a battery pack comprising liquid coolant pipes, according to an example.
**FIG. 3A** is an exemplary schematic illustration of a flotation device attached to a liquid coolant pipe under normal operating conditions, i.e., when a thermal runaway event has not yet occurred, according to an example.
**FIG. 3B** shows the flotation device of **FIG. 3A** in a more zoomed in view including components of the flotation device.
**FIG. 4A** is an exemplary schematic illustration of a flotation device attached to a liquid coolant pipe under excessive temperature conditions, i.e., when a thermal runaway event has occurred, and some coolant has been released into the battery pack, according to an example.
**FIG. 4B** shows the flotation device of **FIG. 4A** in a more zoomed in view including components of the flotation device.
**FIG. 5A** is an exemplary schematic illustration of a flotation device attached to a liquid coolant pipe under excessive temperature conditions, i.e., when a thermal runaway event has occurred, and the liquid level in the battery pack has reached the height of the second portion of the flotation device and caused some movement thereof, according to an example.
**FIG. 5B** shows the flotation device of **FIG. 5A** in a more zoomed in view including components of the flotation device.
**FIG. 6A** is an exemplary schematic illustration of a flotation device attached to a liquid coolant pipe under excessive temperature conditions, i.e., when a thermal runaway event has occurred, and the liquid level in the battery pack has reached the height of the second portion of the flotation device and caused further movement thereof, according to an example.
**FIG. 6B** shows the flotation device of **FIG. 6A** in a more zoomed in view including components of the flotation device.
**FIG. 7** is another exemplary schematic illustration a flotation device according to an example.
**FIG. 8** is another exemplary schematic illustration a flotation device according to an example.
**FIG. 9** is another exemplary schematic illustration a flotation device according to an example.
**FIG. 10** is an exemplary block diagram illustration of a method for thermal runaway management, according to an example.

### DETAILED DESCRIPTION

The detailed description set forth below provides information and examples of the disclosed technology with sufficient detail to enable those skilled in the art to practice the disclosure.

The general concept as defined herein in the respective aspects of the disclosure may be applicable to battery packs of any stationary or moveable unit. Such units may for example be generators, vehicles, handheld devices or the like. In the context of the present disclosure, examples will sometimes be presented relating to a battery pack in an electric vehicle (EV). It should however be noted that any unit possessing a battery pack that can experience thermal runaway may utilize the disclosed technology.

A thermal runaway is a process where an increase in the temperature of a battery or battery pack changes the conditions therein such that a further, uncontrolled, temperature increase is caused. This temperature increase may be started for a number of reasons. For example it may be caused by overcharging or undercharging of the battery pack, a short circuit caused by physical damage, chemical reactions, insufficient cooling, incorrect mixing of battery reactants, pressure buildup in the battery pack, high current loads, and so forth. The thermal runaway may also further damage other battery packs in close proximity, for example due to melting of materials, causing a further thermal runaway event. In this manner, a thermal runaway may spread throughout a battery pack, a high voltage component, or an energy storage system, thereby causing multiple thermal runaway events. While a "thermal runaway" refers to a self-accelerating condition where an increase in temperature causes further increases, potentially leading to destructive outcomes, a "thermal runaway event" specifically denotes the occurrence or instance of this uncontrolled process resulting in damage or failure.

A battery pack is often equipped with coolant pipes accommodating liquid coolant. The liquid coolant is introduced to the battery pack in order to decrease or eliminate the effects of the thermal runaway in the single battery pack, or to decrease or eliminate the risk that the thermal runaway spreads as described above. However, it is envisaged that the release of such a liquid coolant may encounter circuitry inside the battery packs. This could lead to chemical decomposition leading to hydrogen gas buildup, thus further damaging the battery pack. The subject matter of this disclosure thereby seeks to mitigate the above-described negative effects by managing a height level of the of released liquid coolant. This is done by way of attaching a flotation device to one or more existing liquid coolant pipes in the battery pack.

The flotation device includes three main components: a first portion, a second portion, and a third portion. The first portion is designed to selectively cause blockage or opening of an outlet in the liquid coolant pipe, controlling the flow of coolant that enters the battery pack. The second portion is a member inside the battery pack that floats on the surface of the released liquid coolant. The third portion interconnects the first and second portions, enabling a feedback loop by way of the third portion adjusting the position of the first portion based on a position of the second portion. This loop ensures precise control over the coolant level by causing the second portion to float as the liquid level rises, which in turn moves the third portion to adjust the position of the first portion in relation to the outlet. This prevents the coolant from reaching sensitive battery circuitry. Conversely, as the coolant evaporates due to excessive heat, the flotation device allows more coolant to enter the battery pack safely. This dynamic system maintains the desirable coolant level, ensuring safety and efficiency by automatically responding to changes in the liquid level.

The problems referred to above concerning effectively managing thermal runaway events in battery packs can accordingly be solved. This may offer technical benefits relating to a careful control of liquid coolant volume in the battery pack based on the specific layout of the battery cell configuration, ensuring safe containment and effective cooling while mitigating the risk of dangerous incidents such as explosions. This ultimately offers an increased safety and reliability in the event of thermal runaway.

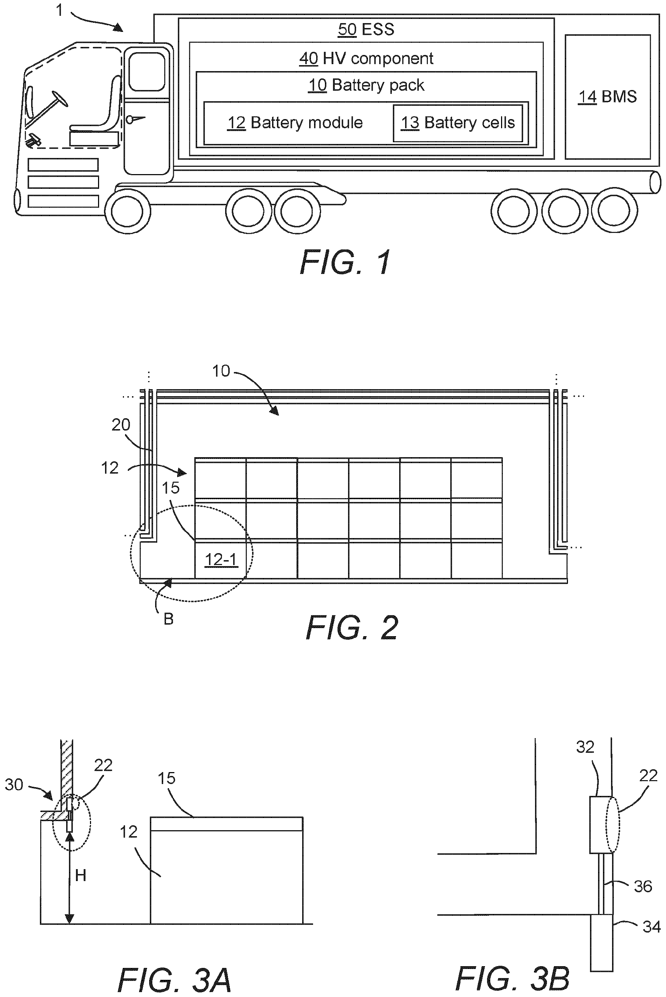

**FIG. 1** is an exemplary schematic illustration of a vehicle **1.** The vehicle **1** is illustrated as a heavy-duty vehicle, in this case a truck. The vehicle **1** is preferably an electric vehicle. In other areas of application other machines typically employing battery systems can be envisaged, such as for buses, marine vessels, construction equipment, personal vehicles, consumer electronics such as smartphones or tablets, home battery storage systems, grid storage systems, drones, satellite systems, portable medical equipment, vacuums, among other areas of application. Essentially, any type of battery using a unit that may experience thermal runaway is an exemplary area of application.

The vehicle **1** comprises an energy storage system, ESS **50.** The ESS **50** is arranged to store electrical energy and release it as needed. The ESS **50** may comprise a high-voltage, HV, component **40.** The HV component **40** is a relative term, and what is considered high voltage may depend on the context. In applicable power systems discussed herein, high voltage typically refers to voltages higher than the standard residential or commercial power distribution levels. Purely by way of example, voltage levels for HV components in traction batteries or fuel cell systems typically range between 200 V and 800 V or more, in DC fast chargers between 600 V and 1000 V, in HEV (Hybrid Electric Vehicles) between 200 and 300 V. The skilled person will appreciate that the voltage level for the HV component **40** is readily adaptable for other HV application areas.

The HV component **40** - or the EES **50** - may comprise a plurality of battery packs **10,** each battery pack **10** having one or more battery modules **12.** The battery modules **12** each carry a set of battery cells **13** responsible for storing energy in chemical form. When chemical reactions occur, electrical energy is harnessed for various application. The battery cell **13** is the fundamental building block of a battery, comprising an anode, cathode, and electrolyte. Multiple battery cells **13** are combined to create a battery module **12.** A battery module **12** can carry further components that enable interaction between battery modules **12,** such as communications units and connectors. Multiple battery modules **12** may in turn be combined to create a battery pack **10,** a modular unit that delivers voltage, capacity, and power for diverse applications. The battery packs **10** may include lithium-ion batteries, lithium iron phosphate batteries, solid-state batteries, graphene batteries, sodium-ion batteries, nickel-cobalt-manganese batteries, aluminum-ion batteries, or other battery types known in the art. The battery packs **10** are rechargeable and adapted to provide a source of electricity for an electric propulsion system (not shown). The battery packs **10** are often arranged in close proximity to one another. The battery modules **12** are often arranged in close proximity to one another inside the battery pack **10.**

The vehicle **1** may comprise a battery management system, BMS **14,** operating in tandem with the ESS **50** by monitoring and managing the individual battery cells **13** within the battery packs **10.** Typically, each battery pack **10** is associated with a BMS controller. Alternatively, the BMS **14** may include a master controller configured to monitor and manage a plurality of battery packs **10.** The BMS **14** may handle functions such as balanced charging and discharging, prevention of overcharging or over-discharging, management of temperatures, and optimizations of overall performance and/or safety. The BMS **14** may decrease or increase the current flowing to and from a battery cell **13** in order to control the temperature therein.

**FIG. 2** is an exemplary schematic illustration of a battery pack **10** according to examples disclosed herein. A plurality of modules and elements are arranged inside the battery pack **10.** The battery pack **10** comprises one or more battery modules **12,** in this particular example 18 battery modules **12.** The battery module **12** provides voltage to the HV component **40** mentioned above. In examples where multiple battery modules **12** are arranged in the battery pack **10,** they may be arranged side-by-side, above one another, or practically anywhere suitable inside of the battery pack **10.** However, one (or possible more) battery modules **12-1** are arranged closest to the bottom **B** of the battery pack **10.** In some examples, the lowest battery module **12-1** is arranged at the bottom **B** of the battery pack **10.** In some further examples, multiple battery modules **12-1** are arranged at about the same height level, closest to the bottom **B.** The person skilled in the art will understand that whichever battery module(s) **12-1** is arranged closest to the bottom **B** of the battery pack **10,** out of all battery modules **12** in the battery pack **10,** may be interpreted as a lowest battery module **12-1.** The lowest battery module **12-1** is thus the bottommost module or modules in relation to the bottom **B** of the battery pack **10.**

Each battery module **12** may comprise a number of exposed circuits. In the current disclosure, reference will be made to a terminal circuit **15.** The terminal circuit **15** is any piece of electric circuitry that, if it encounters a liquid, could cause chemical decomposition of the liquid, or which could be damaged by the liquid. For example, the terminal circuitry **15** could be fuses, wires, connectors, conductors, or exposed metal films, to name a few examples. In general, a terminal circuit **15** could be any piece of the battery module **12** in which electrical current is flowing, and which is exposed to an environment in the inside of the battery pack **10.** The terminal circuit **15** is typically any such piece of circuitry that is arranged closest to the bottom **B** within the battery pack **10,** i.e., the terminal circuit **15** closest to the bottom **B** among all other terminal circuitry in the battery pack **10.**

The battery pack **10** comprises a liquid coolant pipe **20.** In prior art systems, the liquid coolant pipe **20** is primarily used for passive cooling, helping to maintain desirable temperature conditions by circulating coolant around battery cells **13.** In the present disclosure, these existing pipes **20** are repurposed to actively release liquid coolant inside the battery pack **10** during a thermal runaway event. This use allows the liquid coolant to directly manage overheating by being introduced in the inside of the battery pack **10.**

In the example provided, the pipes **20** are arranged along the sides and ceiling of the battery pack **10,** but their configuration can vary. They might be integrated within the walls, floor, or even interwoven between battery modules **12,** depending on the specific design and requirements of the battery pack **10.**

The liquid coolant pipes **20** accommodate a liquid coolant, i.e., having a capacity to hold and transport liquid coolant, ready to release it as needed to control temperature and prevent damage to the battery pack **10.** The liquid coolant typically includes water, which is advantageous due to its suitable vapour point and the high energy required for vaporization, making it effective for cooling. In some examples, the coolant might also include an antifreeze, especially in cold climates or environments with low temperatures, such as freezers. Antifreeze prevents the coolant from freezing, which is useful for two main reasons: it ensures the continuous flow of coolant into the battery pack's **10** interior, and it prevents potential damage to the housing caused by the expansion of the coolant when it freezes.

The dotted portion in **FIG. 2** will now be further explained in detail, with reference to the example of **FIG. 3A****. An** exemplary flotation device **30** is introduced here, attached to the liquid coolant pipe **20.** **FIG. 3A** shows the battery pack **10** operating under normal operating conditions, i.e., when a thermal runaway event has not yet occurred.

The terminal circuit **15** requires protection from liquid exposure while still needing efficient cooling during a thermal runaway event. Currently, no such event has occurred, and the flotation device **30** attached to the coolant pipe **20** operates in a so called non-active mode, effectively blocking an outlet **22** of the pipe **20** that leads into the battery pack **10.** The non-active mode may also be referred to as a passive mode.

The outlet **22** is designed to allow liquid flow from the coolant pipe **20** into the battery pack **10** when needed. The outlet **22** can be created through various manufacturing techniques such as drilling or etching and may also be connected via a fluid connector like a pipe or tube. In some examples, the outlet **22** may be placed below the terminal circuit **15** to limit the risk of coolant splashing onto sensitive components. In some examples, the outlet **22** may be arranged adjacent to the bottom **B** to make the release and distribution of the coolant safer.

The outlet **22** may be partially covered by an openable seal, which acts as a barrier to control the release of liquid coolant. In some examples, the outlet **22** is completely covered by the seal, ensuring no leakage until activation. The seal can also secure a cover made of materials like copper, steel, or ceramic, designed to melt or sublimate at temperatures typical of a thermal runaway event. In some examples, the outlet **22** is equipped with a seal made from a fusible material with a melting or sublimation point between 100-300 °C, such as silicone, ceramics, metals, or polymers like polyamide. The material choice may vary based on the battery pack's **10** operational context. The outlet **22** may also have a seal made from wax materials, such as polytetrafluoroethylene, beeswax, carnauba wax, or paraffin wax, which respond to high temperatures by melting and allowing coolant flow. These designs ensure that when the seal opens, the liquid coolant can effectively flow into the battery pack **10,** managing heat and preventing damage to sensitive components.

As mentioned previously, the terminal circuit **15** can interact in dangerous or harmful ways with a liquid coolant. For example, water may be subjected to chemical decomposition, producing hydrogen gas. Such hydrogen gas in a high-temperature environment, such as the environment prevailing in the case of a thermal runaway, can cause explosions. Furthermore, a liquid coolant may damage the terminal circuit **15.** The inventors have therefore realized the need to carefully manage the height the released coolant is allowed to reach within the battery pack **10** before the outlet **22** needs to be blocked again. This height is in this disclosure referred to as height level **H**, and it can be determined based on how the flotation device **30** is designed. The height limit **H** is a limit below the terminal circuit **15,** as is shown in **FIG. 3A****.**

It should be noted that terminal circuitry is typically present on all of the battery modules **12** in the battery pack **10.** However, the height limit **H** is primarily relevant for the terminal circuit **15** located the closest to the bottom **B.** This is because any terminal circuit **15** positioned above the this terminal circuit **15,** whether on the same lowest battery module **12-1** or another battery module **12,** will only be submerged after the lowest terminal circuit **15** has been submerged. This naturally occurs because the liquid is released to the bottom **B** and rises upwards. Therefore, the focus is directed at the lowest terminal circuit **15.** By managing liquid coolant submersion with respect to the lowest terminal circuit **15,** liquid coolant submersion will consequently also be managed for all the other terminal circuit **15** of the same battery pack **10** due the way the liquid coolant rises in the battery pack **10.** This approach is advantageous as it ensures that all critical components are protected, thereby providing a controlled and effective method for managing thermal runaway.

In some examples, the height limit **H** is a measurable limit, for example in centimeters, that stretches from the bottom **B** of the battery pack **10** to the bottom of the terminal circuit **15** or specific sensitive or conductive parts on the terminal circuit **15.** The flotation device **30** is designed accordingly, namely set at about the same height or slightly lower (such as a few centimeters). For example, a housing spanning for some length holding the sensitive or conductive parts in place can in some examples be submerged in liquid coolant, while making sure the sensitive or conductive parts are not exposed to liquid.

The dotted portion of **FIG. 3A** is shown in more detail in **FIG 3B****,** and reference is made thereto in the following. The flotation device **30** includes three central portions, here referred to as a first portion **32,** a second portion **34,** and a third portion **36.** The flotation device **30** is here positioned in a first end position (also a "highest position").

The first portion **32** is designed to be in fluid communication with the liquid inside the coolant pipe **20,** meaning it is capable of responding to changes in coolant pressure or flow requirements. The first portion **32** acts as a gatekeeper for the outlet **22,** allowing or restricting the flow based on whether a thermal runaway event is ongoing or not. In this passive mode, the first portion **32** completely covers the outlet **22,** preventing any coolant from entering the battery pack **10.** This coverage ensures that coolant is only released when necessary, maintaining the integrity and safety of the battery pack **10.** The design of the first portion **32** can vary widely.

While shown here as a rectangular shape, it could also be circular, oval, or any irregular form, provided it effectively can cause blockage of the outlet **22.** It might be a flexible membrane that molds to contours of the outlet **22** or a rigid cap that securely fits over it. The size can also vary, from a small plug-like structure to a larger panel, depending on the dimensions of the outlet **22** and cooling requirements.

The first portion **32** is in this example arranged inside the coolant pipe **20,** but it is not necessarily the case provided it can cause blockage of the outlet **22.** In other examples it could be moved to activate a switch that closes a hatch, or the like.

The first portion **32** might be made from various materials, such as polymers, metals, or composite materials, chosen for their durability, heat resistance, and compatibility with the coolant. This adaptability in shape, size, and material ensures that the first portion **32** can be tailored to fit different battery pack configurations, tailoring its functionality across various designs and applications.

The first portion **32** is depicted here as being arranged inside the coolant pipe **20,** directly covering the outlet **22** to block coolant flow. However, this arrangement is not the only possibility. The primary requirement is that it must cause blockage of the outlet **22,** regardless of its specific location or mechanism. In alternative designs, the first portion **32** could be positioned outside the pipe **20,** connected to e.g. a lever, actuator or other member that triggers a mechanism to close the outlet **22.** For instance, it could be linked to a switch that activates a sliding or rotating hatch, sealing the outlet **22** when no coolant release is needed. Yet alternatively, the first portion **32** might be part of a more complex system involving gears or cams that engage when the first portion moves, causing a physical barrier to slide into place over the outlet **22.**

The second portion **34,** also referred to as a floating portion, is a component designed to maintain buoyancy on the liquid coolant as it fills the battery pack **10.** This buoyancy occurs when the coolant reaches the height level **H,** aligned with the second portion **34,** allowing it to rise with the liquid surface. This has not yet occurred in the shown example due to the flotation device **30** operating in its passive mode. Typically, the second portion **34** would be arranged external to the coolant pipe **20** such that it can float on the released liquid. In some examples, some parts of the second portion **34** could be arranged inside the coolant pipe **20,** while other parts could be arranged external to the coolant pipe **20.**

The second portion **34** may comprise materials that ensure it remains buoyant, typically with a density lower than that of the liquid coolant. Such materials can include lightweight plastics, foams, or air-filled chambers. These materials enable it to float effectively without adding significant weight to the system.

In some designs, the second portion **34** could include an elongated member having a lower surface that is generally planar with a surface of said released liquid coolant. This may resemble a broad, flat disc, improving surface contact with the coolant for stable floating. Alternatively, it might take the form of a cylindrical buoy or a spherical float, offering flexibility in movement and stability. The second portion **34** may also incorporate features like stabilizing fins or a weighted bottom to ensure it remains upright and responsive, even if the battery pack **10** is subject to vibrations or tilting. This would be more likely in mobile areas of application, such as vehicles.

The third portion **36** acts as a link between the first portion **32** and the second portion **34,** putting the flotation device **30** together in an integrated system that responds dynamically to changes in the liquid coolant level. This interconnection can take several forms, depending on the specific design requirements and operational conditions of the battery pack **10.**

The third portion **36** may be a rigid rod or lever that physically connects the floating second portion **34** to the first portion **32.** As the second portion **34** rises with the coolant, the rod transfers this motion to the first portion **32,** causing it to adjust its position and either block or open the outlet **22.** Alternatively, the third portion **36** could be a flexible cable or chain-like member, providing a more adaptable connection that can accommodate complex movements or layouts within the battery pack **10.** This flexibility allows for smoother transitions and can be beneficial in systems where space is limited or configurations are non-linear. In other variations, the third portion **36** might incorporate a series of gears or pulleys, translating the vertical movement of the second portion **34** into a horizontal or diagonal adjustment of the first portion **32.** This mechanical advantage can enhance precision and control, ensuring accurate responses to changes in coolant level.

While the portions **32, 34, 36** are above described as separate units, it shall be understood that they may form part of an integrated unit in some examples. This integrated unit may include a lower portion representing the second portion **34,** a middle portion representing the third portion **36,** and an upper portion representing the first portion **32.** For example, it may be a single block capable of bobbing on a surface of a liquid coolant to selectively cause blockage of the outlet **22.** Depending on design requirements, the various portions may have any length making up the total length of the single block (e.g. 10%, 80%, 10%; or 33%, 33%, 33%; or 90%, 5%, 5%; or practically any suitable length distribution).

The movement of the flotation device **30** discussed herein is explained as a vertical displacement along the height of the battery pack **10,** although other types of movements can be envisaged, including but not limited to rotational movements, where the device **30** pivots around a fixed point, lateral movements, where the device **30** slides horizontally, or angular adjustments, where the device **30** tilts in response to the coolant level, offering versatile solutions for various battery pack designs and configurations.

The relationship between the portions **32, 34, 36** forms a cohesive feedback loop. As the second portion **34** floats and moves with the coolant level, the third portion **36** transfers this movement to the first portion **32.** This results in the first portion **32** adjusting its position to maintain the coolant level at the desired height limit **H,** preventing excess coolant from reaching the terminal circuit **15.** This feedback loop may also be useful where natural condensation of the coolant occurs due to the high temperatures within the battery pack **10.** As the coolant evaporates to cool the system, it condenses and reduces in volume, allowing the second portion **34** to lower. This change is detected by the third portion **36** in response to a height drop of the second portion **34,** which consequently adjusts the first portion **32** to permit additional coolant inflow. This continuous adjustment ensures the coolant level remains as desired, effectively managing thermal conditions while preventing excess liquid from reaching the terminal circuit **15.**

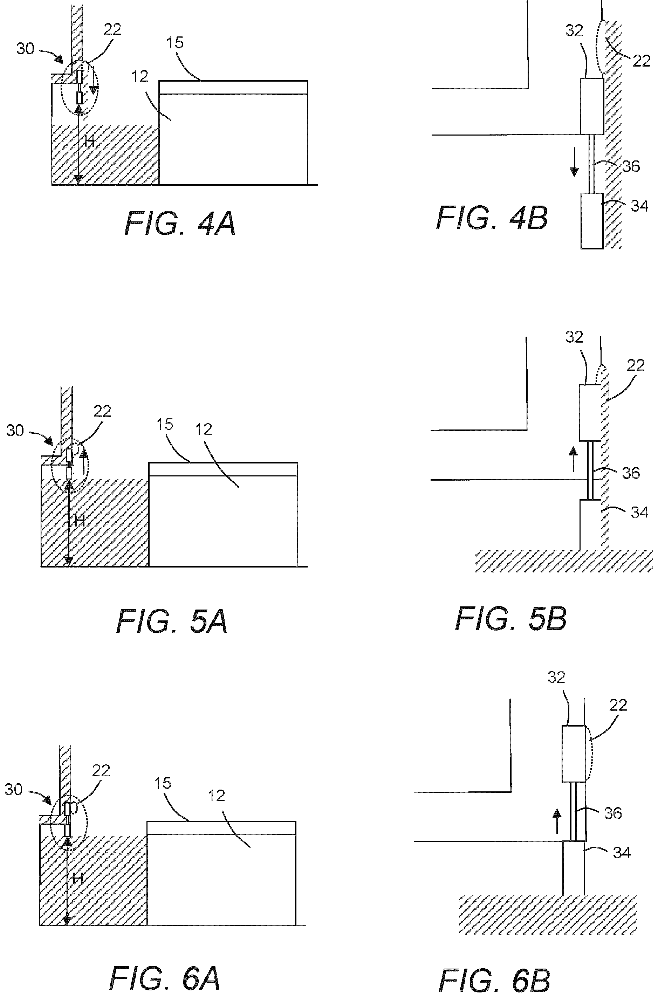

In **FIGs. 4A-B**, a continuation of **FIGs. 3A-B** is shown. Here, the battery pack **10** experiences excessive temperature conditions due to a thermal runaway event. This triggers the release of coolant into the battery pack **10** to manage and reduce the heat. The coolant flows through the outlet **22** from the coolant pipe **20** and fills the battery pack **10** up towards the height limit **H,** as shown in the figures. The flotation device **30** is thus positioned in its second end position (also a "lowest position").

The actuation of liquid release can occur through several mechanisms. Temperature sensors within the battery pack **10** and/or the BMS **14** can detect rising heat levels, signaling the device to release coolant once a temperature and/or voltage threshold limit is reached. Alternatively, the outlet **22** may include a fusible material that melts at high temperatures, triggering a mechanical action to open the outlet **22.** Pressure sensors can also be arranged in the battery pack **10,** and as internal pressure builds due to the heat, exceeding a pre-set limit can activate the trigger of the liquid actuation. Other mechanical triggers, such as bimetallic strips or thermal expansion elements, could also be used, where differential expansion due to heat causes release of liquid.

**FIGs. 5A-B** show a continuation of the example of **FIGs. 4A-B**. Here, the released liquid has reached the height limit **H** corresponding to that of the second portion **34** of the flotation device **30.** The buoyancy of the second portion **34** thus causes a push of the flotation device **30** upwards, transferring motion from the second portion **34** to the first portion **32** via the third portion **36.** The flotation device **30** is still in an active mode due to the thermal runaway event being ongoing. However, the outlet **22** is partially obstructed by the movement of the first portion **32.** Liquid will thereby not be released with the same velocity, as the area of an open portion of the outlet **22** is smaller compared to when the height level of the released liquid is lower.

**FIGs. 6A-B** show a continuation of the example of **FIGs 5A-B**. Here, the released liquid has continued to push the second portion **34** upwards to the first end position ("highest position") again. The flotation device **30** is still in an active mode because the thermal runaway event is still ongoing, but the outlet **22** is blocked due to the buoyancy of the second portion **34.**

To summarize the procedure explained in **FIG. 3A** to **FIG. 6B** above, the following can be envisaged. The flotation device **30** is capable of assuming one of two modes: a passive mode and an active mode. The position of the first portion **32** is adjustable by the third portion **36** based on a position of the second portion **34.** In the passive mode, the outlet **22** is in a blocked state, where the first portion **32** causes blockage of the outlet **22,** for example by a physical block. In the active mode, the outlet **22** enters an unblocked state, for example by a rupturing of a fusible material. The accommodated liquid coolant is thus released through the outlet **22.** When the released liquid coolant inside the battery pack **10** reaches a height level **H** corresponding to that of the second portion **34,** the position of the second portion **34** inherently changes thanks to its buoyancy feature. By way of the interconnection between the first and second portions **32, 34** via the third portion **36,** this will make the third portion **36** adjust the position of the first portion **32.** The state of the outlet **22** will thereby shift from the unblocked towards the blocked state. Since the thermal runaway event has already occurred, the purpose of the flotation device **30** has been served, so the passive state will not be re-entered again, albeit the coolant level inside the battery pack **10** is accurately controlled.

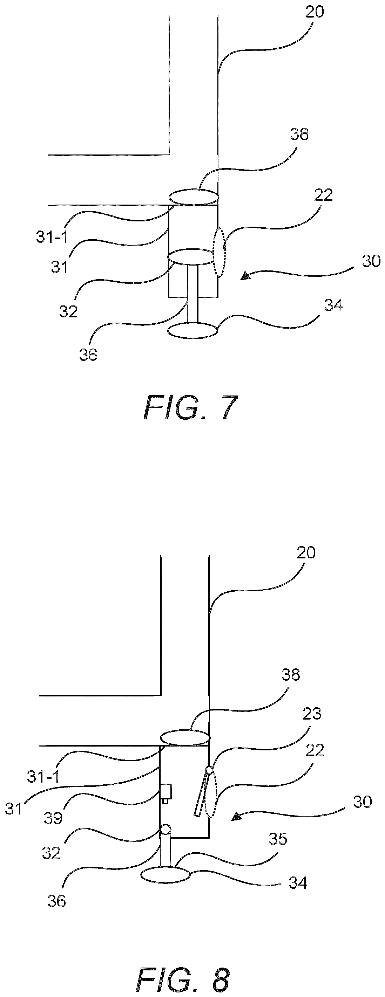

**FIG. 7** shows an exemplary flotation device **30.** A couple of additional components are introduced here, in addition to those explained above in **FIGs. 3A-6B****,** involving an actuator **38** and a pipe extension portion **31.**

The pipe extension portion **31** houses the first portion **32,** the outlet **22,** and parts of the third portion **36.** The extent of parts of the third portion **36** housed by the pipe extension portion **31** depends on the vertical displacement of the flotation device **30,** which in turn depends on liquid level in the battery pack **10.** The pipe extension portion **31** serves as an additional chamber that integrates components to allow for more organized and efficient flow control. The pipe extension portion **31** acts as a dedicated space where the flotation device **30** can operate with limited interference from the main coolant pipe **20.**

The pipe extension portion **31** can be retrofitted to the existing liquid coolant pipe **20.** This retrofit creates an opening **31-1** at one end of the pipe extension portion **31** (in this illustration the upper end), allowing for the controlled flow of coolant into the battery pack **10.** The retrofit design enables the integration of the flotation device **30** into existing systems with little modifications required to be made to the original coolant pipe **20.** This flexibility in design makes it adaptable to various spatial constraints within the battery pack **10.** The pipe extension portion **31** can be shaped and sized to fit different configurations, both of the pipe **30** and of the battery pack **10,** offering a versatile solution that can accommodate non-standard layouts or tight spaces, rather than, for instance, just adhering to a rectangular form.

The actuator **38** is configured to control the release of liquid coolant through the outlet **22.** This actuator **38** provides an additional layer of control, ensuring the coolant is released precisely when needed. By incorporating an actuator **38,** the flotation device **30** can respond more dynamically to changes in the battery pack's **10** thermal conditions. The actuator **38** can be programmed to react to specific triggers, such as temperature increases or pressure changes. This setup allows for a more refined management of coolant flow, reducing the risk of unnecessary coolant discharge and preserving the battery pack's **10** integrity.

The actuator **38** may be fully integrated into the flotation device **30,** creating a compact and efficient device. This integration may ensure that the actuator **38** works seamlessly with the other components of the flotation device **30** with low delay. By being part of the flotation device **30,** the actuator **38** can more effectively coordinate the opening and closing of the outlet **22** based on real-time conditions, reducing the need for external connections or additional components which may ultimately simplify installation and maintenance. The integrated actuator **38** can be tailored to fit the specific design of the flotation device **30,** ensuring compatibility and reliability.

The actuator **38** may be configured to be controlled by the BMS **14.** This connection allows the actuator **38** to receive direct input from the BMS **14** monitoring battery data to detect thermal runaway events. By linking the actuator **38** to the BMS **14,** the release of coolant can be precisely timed to coincide with actual thermal needs, leveraging existing battery infrastructure to enhance safety and performance.

Similar to the outlet **22,** the actuator **38** may include a fusible material with a melting or sublimation point corresponding to a specific temperature threshold. This material is designed to react to excessive heat, melting or sublimating to trigger the release of coolant. By incorporating a fusible material, the actuator **38** provides an additional or alternative automatic, fail-safe mechanism for coolant release during a thermal runaway event.

In this example, the flotation device **30** uses the third portion **36** to move the first portion **32** into physical contact to block the outlet **22.** This direct mechanical movement ensures that the outlet **22** is closed when the coolant level reaches a certain height level. The design allows for a straightforward and reliable method of preventing excess coolant from entering the battery pack **10,** utilizing the buoyancy of the second portion **34** to drive the physical closure process.

**FIG. 8** shows an exemplary flotation device **30.** A couple of additional components are introduced here, in addition to those explained above in **FIG. 7****,** involving a controllable hatch **23** moving between a blocking state and an open state, as well as an electronic switch **39.** Here, the second portion **34** comprises an elongated member **35.**

The electronic switch **39** is activated by the movement of the third portion **36** by way of the second portion's **34** buoyancy. As the second portion **34** floats, the third portion **36** moves the first portion **32** to triggers the electronic switch **39,** initiating a mechanism to control the hatch **23.** The electronic switch **39** can be positioned at any suitable location within the battery pack **10,** such as adjacent to the outlet **22,** along the pipe extension portion **31,** or near the actuator **38,** as long as it can be effectively triggered by the floating of the second portion **34.** Its placement is flexible, allowing it to be integrated into various configurations, ensuring it responds accurately to the movement initiated by the buoyancy of the second portion **34.**

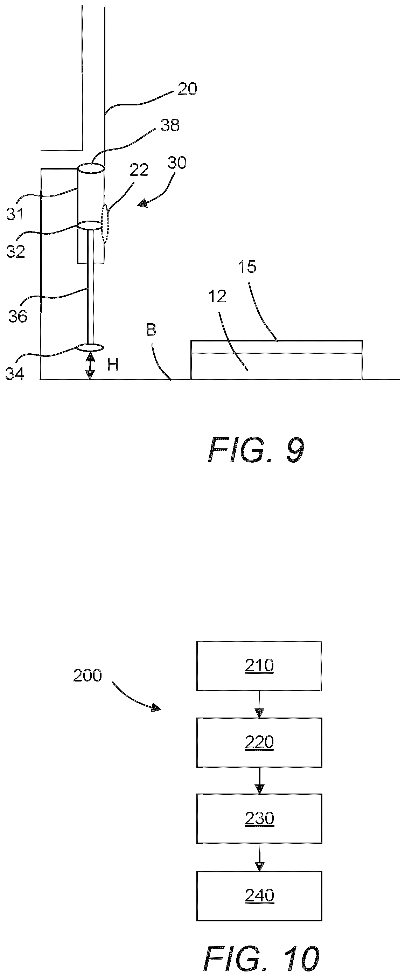

**FIG. 9** shows another exemplary variant of the flotation device **30.** This flotation device **30** includes the portions **31, 32, 34, 36** and the actuator **38.** The main difference here is how the third portion **36** is formed. Since the terminal circuit **15** is arranged at a lower location relative the bottom **B,** the height limit **H** is thus adjusted to prevent the coolant level from rising above the terminal circuit **15.** In this example the solution involves increasing the length of the third portion **36** such that the second portion **34** will start to float at a lower level. The extended third portion **36** can be designed as a longer rod, providing the necessary reach to engage the second portion **34** at a reduced height. Moreover, the third portion **36** may include telescopic features, allowing it to extend or retract as needed. This would offer additional flexibility, enabling the flotation device **30** to adjust dynamically to different battery pack configurations.

In examples of this disclosure, the flotation device **30** has been visualized generally in an "I"-shape. It shall be noted that this is just one specific example. Other configurations, such as an "L"-shape for the third portion **36,** can be envisaged to accommodate different spatial and functional requirements. Additionally, the flotation device **30** could feature a "T"-shape (for example where the first portion **32** is either end of the upper part of the "T", the second portion **34** being another end, and the third portion **36** interconnecting these ends), a "U"-shape, or a tilted "I"-shape at a suitably selected angle. Similarly, the outlet **22** need not be positioned on a lateral side of the coolant pipe **20;** it can be arranged on a bottom side, with the first portion **32** designed to cover the outlet from below, or even an upper side with a third portion **36** that bends around the pipe **20** such that the second portion **34** can float. This may offer versatility in design to fit various battery pack **10** layouts.

**FIG. 10** is an exemplary flowchart of a method **200** for thermal runaway management. The method **200** comprises a step **210** of accommodating liquid coolant in a liquid coolant pipe **20** of a battery pack **10** having one or more battery modules **12.** The method **200** further comprises a step **220** of attaching a flotation device **30** to the liquid coolant pipe **20.** The flotation device **30** comprises a first portion **32** arranged in fluid communication with liquid coolant accommodated by the liquid coolant pipe **20,** the first portion **32** causing selective blocking or opening of an outlet **22** leading inside the battery pack **10.** The flotation device **30** comprises a second portion **34** arranged inside the battery pack **10** and being floatable. The flotation device **30** comprises a third portion **36** interconnecting the first and second portions **32, 34,** wherein the third portion **36** is configured to adjust a position of the first portion **32** based on a position of the second portion **34.**

In further examples of the disclosure the following examples can be envisaged.

Example 1: A flotation device (30) is attached to a liquid coolant pipe (20) of a battery pack (10) having one or more battery modules (12). The flotation device (30) comprises a first portion (32) arranged in fluid communication with liquid coolant accommodated by the liquid coolant pipe (20). This first portion (32) selectively blocks or opens an outlet (22) leading inside the battery pack (10). A second portion (34) is arranged inside the battery pack (10) and being floatable. A third portion (36) interconnects the first and second portions (32, 34). The third portion (36) is configured to adjust a position of the first portion (32) based on a position of the second portion (34).

Example 2: The flotation device (30) of Example 1, wherein the third portion (36) adjusts the position of the first portion (32) to physically block the outlet (22).

Example 3: The flotation device (30) of any preceding example, further comprising an electronic switch (39), wherein the third portion (36) adjusts the position of the first portion (32) to activate said electronic switch (39) to trigger a block of the outlet (22).

Example 4: The flotation device (30) of any preceding example, further comprising a pipe extension portion (31), wherein the first portion (32), the outlet (22), and at least parts of the third portion (36) are arranged in the pipe extension portion (31).

Example 5: The flotation device (30) of Example 4, wherein the pipe extension portion (31) is retrofitted to the liquid coolant pipe (20) such that an opening (31-1) for liquid coolant is formed at an end of the pipe extension portion (31).

Example 6: The flotation device (30) of any preceding example, further comprising an actuator (38) configured to control the release of liquid coolant through the outlet (22).

Example 7: The flotation device (30) of Example 6, wherein the actuator (38) is integrated into the flotation device (30).

Example 8: The flotation device (30) of any of Examples 6-7, wherein the actuator (38) is configured to be controlled by a battery management system (14) of the battery pack (10) based on battery data indicating the presence of the thermal runaway event.

Example 9: The flotation device (30) of any of Examples 6-8, wherein the actuator (38) comprises a fusible material having a melting point or sublimation point corresponding to a temperature threshold.

Example 10: The flotation device (30) of any preceding example, wherein the outlet (22) comprises a fusible material having a melting point or sublimation point corresponding to a temperature threshold.

Example 11: The flotation device (30) of any preceding example, wherein the second portion (34) comprises a material having a density lower than that of the liquid coolant.

Example 12: The flotation device (30) of any preceding example, wherein the second portion (34) comprises an elongated member (35) having a lower surface that is generally planar with a surface of said released liquid coolant.

Example 13: The flotation device (30) of any preceding example, wherein the outlet (22) comprises a controllable hatch (23) movable between a blocking state and an open state.

Example 14: The flotation device (30) of any preceding example, wherein the outlet (22) is arranged below a terminal circuit (15) of a lowest battery module (12-1) from among the one or more battery modules (12).

Example 15: The flotation device (30) of Example 14, wherein the outlet (22) is arranged adjacent to a bottom (B) of the battery pack (10).

Example 16: A liquid coolant pipe (20) comprising the flotation device (30) of any of Examples 1-15.

Example 17: A battery pack (10) comprising at least one battery module (12) and the liquid coolant pipe (20) of Example 16.

Example 18: A high-voltage component (40) comprising the battery pack (10) of Example 17.

Example 19: An energy storage system (50) comprising the high-voltage component (40) of Example 18.

Example 20: A vehicle (1) comprising the energy storage system (50) of Example 19.

Example 21: A method (200) for thermal runaway management, comprising accommodating (210) liquid coolant in a liquid coolant pipe (20) of a battery pack (10) having one or more battery modules (12); attaching (220) a flotation device (30) to the liquid coolant pipe (20), wherein the flotation device (30) comprises a first portion (32) arranged in fluid communication with liquid coolant accommodated by the liquid coolant pipe (20), the first portion (32) causing selective blocking or opening of an outlet (22) leading inside the battery pack (10), a second portion (34) arranged inside the battery pack (10) and being floatable, and a third portion (36) interconnecting the first and second portions (32, 34), wherein the third portion (36) is configured to adjust a position of the first portion (32) based on a position of the second portion (34).

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A flotation device (30) attached to a liquid coolant pipe (20) of a battery pack (10) having one or more battery modules (12), the flotation device (30) comprising:
a first portion (32) arranged in fluid communication with liquid coolant accommodated by the liquid coolant pipe (20), the first portion (32) causing selective blocking or opening of an outlet (22) leading inside the battery pack (10);
a second portion (34) arranged inside the battery pack (10) and being floatable; and
a third portion (36) interconnecting the first and second portions (32, 34), wherein the third portion (36) is configured to adjust a position of the first portion (32) based on a position of the second portion (34).

2. The flotation device (30) of claim 1, wherein the third portion (36) adjusts the position of the first portion (32) to physically block the outlet (22).

3. The flotation device (30) of any preceding claim, further comprising an electronic switch (39), wherein the third portion (36) adjusts the position of the first portion (32) to activate said electronic switch (39) to trigger a block of the outlet (22).

4. The flotation device (30) of any preceding claim, further comprising a pipe extension portion (31), wherein the first portion (32), the outlet (22), and at least parts of the third portion (36) is arranged in the pipe extension portion (31).

5. The flotation device (30) of claim 4, wherein the pipe extension portion (31) is retrofitted to the liquid coolant pipe (20) such that an opening (31-1) for liquid coolant is formed at an end of the pipe extension portion (31).

6. The flotation device (30) of any preceding claim, further comprising an actuator (38) configured to control the release of liquid coolant through the outlet (22).

7. The flotation device (30) of claim 6, wherein the actuator (38) is configured to be controlled by a battery management system (14) of the battery pack (10) based on battery data indicating the presence of the thermal runaway event.

8. The flotation device (30) of any of claims 6-7, wherein the actuator (38) comprises a fusible material having a melting point or sublimation point corresponding to a temperature threshold.

9. The flotation device (30) of any preceding claim, wherein the outlet (22) comprises a fusible material having a melting point or sublimation point corresponding to a temperature threshold.

10. The flotation device (30) of any preceding claim, wherein the second portion (34) comprises a material having a density lower than that of the liquid coolant.

11. The flotation device (30) of any preceding claim, wherein the second portion (34) comprises an elongated member (35) having a lower surface that is generally planar with a surface of said released liquid coolant.

12. The flotation device (30) of any preceding claim, wherein the outlet (22) comprises a controllable hatch (23) movable between a blocking state and an open state.

13. The flotation device (30) of any preceding claim, wherein the outlet (22) is arranged below a terminal circuit (15) of a lowest battery module (12-1) from among the one or more battery modules (12).

14. The flotation device (30) of claim 13, wherein the outlet (22) is arranged adjacent to a bottom (B) of the battery pack (10).

15. A method (200) for thermal runaway management, comprising:
accommodating (210) liquid coolant in a liquid coolant pipe (20) of a battery pack (10) having one or more battery modules (12); and
attaching (220) a flotation device (30) to the liquid coolant pipe (20), wherein the flotation device (30) comprises:
- a first portion (32) arranged in fluid communication with liquid coolant accommodated by the liquid coolant pipe (20), the first portion (32) causing selective blocking or opening of an outlet (22) leading inside the battery pack (10),
- a second portion (34) arranged inside the battery pack (10) and being floatable, and
- a third portion (36) interconnecting the first and second portions (32, 34), wherein the third portion (36) is configured to adjust a position of the first portion (32) based on a position of the second portion (34);

## Amended claims

### Amended claims in accordance with Rule 137(2) EPC.

1. A flotation device (30) for attachment to a liquid coolant pipe (20) of a battery pack (10) having one or more battery modules (12), the flotation device (30) comprising:
a first portion (32) arranged in fluid communication with liquid coolant accommodated by the liquid coolant pipe (20), the first portion (32) causing selective blocking or opening of an outlet (22) leading inside the battery pack (10);
a second portion (34) arranged inside the battery pack (10) and being floatable; and
a third portion (36) interconnecting the first and second portions (32, 34), wherein the third portion (36) is configured to adjust a position of the first portion (32) based on a position of the second portion (34),
**characterized in that** the flotation device (30) further comprises a pipe extension portion (31), wherein the first portion (32), the outlet (22), and at least parts of the third portion (36) is arranged in the pipe extension portion (31).

2. The flotation device (30) of claim 1, wherein the third portion (36) adjusts the position of the first portion (32) to physically block the outlet (22).

3. The flotation device (30) of any preceding claim, further comprising an electronic switch (39), wherein the third portion (36) adjusts the position of the first portion (32) to activate said electronic switch (39) to trigger a block of the outlet (22).

4. The flotation device (30) of any preceding claim, wherein the pipe extension portion (31) is retrofitted to the liquid coolant pipe (20) such that an opening (31-1) for liquid coolant is formed at an end of the pipe extension portion (31).

5. The flotation device (30) of any preceding claim, further comprising an actuator (38) configured to control the release of liquid coolant through the outlet (22).

6. The flotation device (30) of claim 5, wherein the actuator (38) is configured to be controlled by a battery management system (14) of the battery pack (10) based on battery data indicating the presence of the thermal runaway event.

7. The flotation device (30) of any of claims 5-6, wherein the actuator (38) comprises a fusible material having a melting point or sublimation point corresponding to a temperature threshold.

8. The flotation device (30) of any preceding claim, wherein the outlet (22) comprises a fusible material having a melting point or sublimation point corresponding to a temperature threshold.

9. The flotation device (30) of any preceding claim, wherein the second portion (34) comprises a material having a density lower than that of the liquid coolant.

10. The flotation device (30) of any preceding claim, wherein the second portion (34) comprises an elongated member (35) having a lower surface that is generally planar with a surface of said released liquid coolant.

11. The flotation device (30) of any preceding claim, wherein the outlet (22) comprises a controllable hatch (23) movable between a blocking state and an open state.

12. The flotation device (30) of any preceding claim, wherein the outlet (22) is arranged below a terminal circuit (15) of a lowest battery module (12-1) from among the one or more battery modules (12).

13. The flotation device (30) of claim 12, wherein the outlet (22) is arranged adjacent to a bottom (B) of the battery pack (10).

14. A method (200) for thermal runaway management, comprising:
accommodating (210) liquid coolant in a liquid coolant pipe (20) of a battery pack (10) having one or more battery modules (12); and
attaching (220) a flotation device (30) to the liquid coolant pipe (20), wherein the flotation device (30) comprises:
- a first portion (32) arranged in fluid communication with liquid coolant accommodated by the liquid coolant pipe (20), the first portion (32) causing selective blocking or opening of an outlet (22) leading inside the battery pack (10),
- a second portion (34) arranged inside the battery pack (10) and being floatable, and
- a third portion (36) interconnecting the first and second portions (32, 34), wherein the third portion (36) is configured to adjust a position of the first portion (32) based on a position of the second portion (34),
**characterized in that** the flotation device (30) further comprises a pipe extension portion (31), wherein the first portion (32), the outlet (22), and at least parts of the third portion (36) is arranged in the pipe extension portion (31).
